# EUROPÄISCHE PATENTANMELDUNG

(11) **EP 2 451 037 A2**
(43) Veröffentlichungstag der Anmeldung: **09.05.2012**
(21) Anmeldenummer: 11007418.4
(22) Anmeldetag: 13.09.2011
(51) Int. Cl.: H02G 1/14, H02G 9/02

(54) **Fixierhilfe zur Manipulation von Kabeln**

(30) Priorität: 04.11.2010 DE 102010050205
(71) Anmelder: RWE Deutschland AG, 45128 Essen (DE)
(72) Erfinder: Smolin, Roman, 51491 Overath (DE)
(74) Vertreter: Polypatent

(57) **Zusammenfassung**

Die Erfindung betrifft eine Fixierhilfe (1) zur Manipulation von Kabeln als Stellage für Kabel (2) mit wenigstens drei Stützen (3), die wenigstens eine Aufnahme (4) zur Lagesicherung wenigstens eines Kabels (2) bilden und/oder aufweisen.

## Beschreibung

Die Erfindung betrifft eine Fixierhilfe zur Manipulation von Kabeln.

Zur Manipulation von Kabeln werden Einrichtungen benötigt, um Kabel bei Kabelarbeiten, wie z. B. dem Absetzen von Kabeln, Montage von Kabeln, dem Vorbereiten von Muffenmontagen, der Muffenendmontage, sowie dem Prüfen mit Hilfe eines Messwagens, zu fixieren.

Solche Einrichtungen zum Fixieren werden bisher aus Brettern, Holzbalken, Steinen oder Werkzeugkisten provisorisch zusammengestellt bzw. zusammengebaut. Der Aufbau solcher Einrichtungen ist aufwändig und zeitintensiv. Die Einrichtungen werden an Fixpunkten, wie z. B. dem Grabenrand einer Baugrube und/oder die Seitenränder der Baugrube aufgestellt. Dabei sind die Einrichtungen meist nicht an die Gegebenheiten angepasst.

Beim Einsatz einer solchen provisorischen Einrichtung kann die Stabilität der Einrichtung nur bedingt gewährleistet werden. Ein etwaiges Umkippen der Einrichtung, hervorgerufen durch eine ungewünschte Belastung durch die Gewichtskräfte eines oder mehrerer Kabel kann nicht ausgeschlossen werden. Die Unsicherheit bezüglich eines ungewollten Umkippens einer provisorischen Einrichtung zum Fixieren der Kabel steigt insbesondere bei der Arbeit an mehreren Kabeln, da die auftretenden Kräfte und Biegemomente nur schwer zu überblicken sind. Ferner sind herkömmliche provisorische Einrichtungen zum Fixieren nicht zur Aufnahme von Kabeln angepasst. Die Fixierung der Kabel ist meist nur unzuverlässig, so dass die Möglichkeit besteht, dass Kabel von der jeweiligen Einrichtung abrutschen. Für die Anwender solcher provisorischen Einrichtungen besteht aufgrund der unzuverlässigen Fixierung der Kabel daher die Gefahr des ungewollten Kontakts mit stromführenden Leitungen und somit die Gefahr etwaiger Verletzungen.

Der Erfindung liegt die Aufgabe zugrunde, eine Fixierhilfe bereitzustellen, die einfach und kostengünstig herzustellen und zu transportieren ist und dabei gleichzeitig eine sichere und zuverlässige Fixierung von Kabeln zur Manipulation derselben gewährleistet.

Die Aufgabe wird gelöst durch eine Fixierhilfe zur Manipulation von Kabeln als Stellage für Kabel mit wenigstens drei Stützen, die wenigstens eine Aufnahme zur Lagesicherung wenigstens eines Kabels bilden und/oder aufweisen.

In einer vorteilhaften Ausgestaltung der Fixierhilfe ist die Aufnahme höhenverstellbar ausgebildet. So kann die Höhe der Aufnahme zur Lagesicherung eines Kabels an die Gegebenheiten und/oder den Benutzer angepasst werden und ist damit auch bei unterschiedlichen räumlichen Gegebenheiten einsetzbar.

In einer weiteren Ausgestaltung der Erfindung bilden wenigstens zwei Stützen eine Hubschere, wobei die Stützen als Hubscherenschenkel verdrehbar aneinander befestigt sind. Bei einer solchen Ausgestaltung der Erfindung kann zum einen der Abstand des Schwerpunkts der Fixierhilfe von einer Aufstellfläche oder aber die von der Fixierhilfe beanspruchte Stützfläche auf der Aufstellfläche durch Variation des Winkels zwischen den Hubscherenschenkeln variiert werden. Letzteres ist insbesondere bei räumlich begrenzten Aufstellflächen, wie z.B. in Baugruben, günstig. Zweckmäßigerweise sind die Hubscherenschenkel so zueinander verdrehbar, dass diese zueinander parallel ausgerichtet werden können. So kann das Transportvolumen der Fixierhilfe minimiert werden.

Zweckmäßigerweise bildet wenigstens ein Zwischenraum zwischen den Stützen die Aufnahme. Erfindungsgemäß können Kabel mithilfe der Fixierhilfe aufgebockt und durch eine geeignete Fixierung in der Bewegung eingeschränkt werden. Die Einschränkung der Bewegung betrifft in erster Linie seitliche Bewegungen, wobei mit seitlichen Bewegungen hier und im folgenden solche Bewegungen gemeint sind, die parallel zum Erdboden und in zur Längsrichtung der Kabel senkrechter Richtung erfolgen. In einer solchen zweckmäßigen Ausgestaltung der Erfindung ist die Bewegung der Kabel durch die Stützen einschränkbar, indem die Kabel im Zwischenraum zwischen den Stützen aufgenommen werden.

So ist es beispielsweise besonders Vorteilhaft, wenn der Zwischenraum zwischen den Hubscherenschenkeln die Aufnahme bildet. Bei einer solchen Ausgestaltung kann durch Variation des Winkels zwischen den Hubscherenschenkeln die Aufnahme in der Höhe eingestellt werden. Ferner wird bei geringstem Materialaufwand für die Fixierhilfe sowohl eine aus zwei Stützen bestehende Stellage als auch eine Aufnahme bereitgestellt. Die zwischen den Hubscherenschenkeln vorliegende keilförmige Aufnahme bildet eine optimale Aufnahme zur Lagesicherung von Kabeln mit variablem Durchmesser. Eine Bewegung der Kabel in seitlicher Richtung kann unabhängig vom Kabeldurchmesser vollständig verhindert werden.

In einer besonders vorteilhaften Ausgestaltung der Erfindung ist der Winkel zwischen den Hubscherenschenkeln fest einstellbar. Beispielsweise können die beiden Hubscherenschenkel mit Mitteln ausgestattet sein, mithilfe derer die beiden Hubscherenschenkel bei einem bestimmten Winkel ineinander einrasten. Zum Einrasten kann ein Hubscherenschenkel beispielsweise mit einer Aussparung ausgestaltet sein, in die der andere Hubscherenschenkel einrasten kann, wenn die beiden Hubscherenschenkel passend zueinander verdreht werden. So kann beim Aufstellen der Fixierhilfe ein unerwünschtes Verdrehen der beiden Hubscherenschenkel zueinander verhindert werden.

Besonders vorteilhaft in einer solchen Ausgestaltung ist es, wenn der Winkel zwischen den Hubscherenschenkeln kleiner als 90° ist, vorzugsweise ungefähr 60° bzw. 120° beträgt. Durch Drehen der Fixierhilfe um 90° kann so ebenfalls die Aufnahme der Fixierhilfe in der Höhe verstellt werden, wobei gleichzeitig maximale Stabilität der Fixierhilfe z.B. gegen ein ungewünschtes Verdrehen der Hubscherenschenkel beim Aufstellen gewährleistet werden kann.

In einer weiteren Ausgestaltung der Erfindung liegen die Hubscherenschenkel im Wesentlichen in einer Hubscherenebene. Als Hubscherenebene wird erfindungsgemäß diejenige Ebene bezeichnet, die von zwei Hubscherenschenkeln aufgespannt wird. Eine Hubschere mit Hubscherenschenkel, die im Wesentlichen in einer Hubscherenebene liegen ist aufgrund der Anordnung der Hubscherenschenkel im Wesentlichen gegenüber Kräften, die innerhalb dieser Ebene wirken gegen ein Umkippen gesichert. Im Gegensatz dazu können bereits kleine senkrecht auf die Hubscherenebene wirkende Kräfte ein Umkippen der Hubschere bewirken. Zum Aufbocken von Kabeln und insbesondere ununterbrochenen Kabelsträngen, muss die Stütze, die unter die Kabel gebracht wird, aber im Wesentlichen gegenüber etwaigen Seitwärtsbewegungen der Kabel stabilisiert werden. Bewegungen in Längsrichtung der Kabel werden im Allgemeinen durch die Kabel selbst stabilisiert. Eine Fixierhilfe entsprechend dieser Ausführungsform mit Hubscherenschenkeln, die im Wesentlichen in einer Hubscherenebene liegen, kann eine solche Stabilisierung gegenüber Seitwärtsbewegungen des Kabels bei geringstem Materialeinsatz gewährleisten. Bei einer solchen Ausführungsform der Erfindung können die Hubscherenschenkel der Fixierhilfe senkrecht zur Längsrichtung der Kabel unter den Kabeln positioniert werden, so dass ein Umkippen der Fixierhilfe in seitlicher Richtung durch die Hubscherenschenkel verhindert werden kann.

In einer wiederum weiteren Ausgestaltung der Erfindung ist zur Stabilisierung der Fixierhilfe wenigstens eine Stütze in einem Winkel zur Hubscherenebene abwinkelbar an der Fixierhilfe befestigt. Eine solche Ausgestaltung der Fixierhilfe hat den Vorteil, dass eine solche Fixierhilfe auch in einem Winkel zur Hubscherenebene, insbesondere in einem Winkel senkrecht zur Hubscherenebene, gegen ein Umkippen stabilisiert werden kann. So kann die Fixierhilfe beispielsweise zum Verbinden von Kabeln eingesetzt werden, bei denen der Kabelabschnitt eines Kabels kurz vor dem Kabelende von der Fixierhilfe aufgenommen werden kann.

Um der bei einem unterbrochenen Kabel auf beiden Seiten der Fixierhilfe ungleichen Gewichtsverteilung, aufgrund des Eigengewichts der jeweiligen Kabelabschnitte, entgegen zu wirken, kann es in einem solchen Fall vorteilhaft sein, eine Stütze in Längsrichtung der Kabel aufzustellen, so dass ein Umkippen der Fixierhilfe in einer Richtung senkrecht zur Hubscherenebene verhindert werden kann. Um eine möglichst sichere Aufstellung der Fixierhilfe zu gewährleisten, hat eine abwinkelbar an der Fixierhilfe befestigte Stütze den Vorteil, dass der Winkel an die bei einem Einsatz der Fixierhilfe vorliegenden Gegebenheiten angepasst werden kann. Ferner kann die Stütze zum Transport eingeklappt werden.

Zweckmäßigerweise weist die Stütze in einer Ausgestaltung der Erfindung wenigstens eine Raststellung auf, so dass die Stabilität der Fixierhilfe beim Aufstellen auch in Bezug auf diese Stütze gewährleistet werden kann. Beispielsweise kann die Stütze zwei Raststellungen aufweisen, wobei die eine Raststellung zum Einrasten der Stütze bei einem Winkel von ungefähr 45° und die andere Raststellung zum Einrasten der Stütze bei einem Winkel von ungefähr 90° ausgebildet ist. In einer besonders vorteilhaften Ausgestaltung der Erfindung sind die Raststellungen so ausgebildet, dass die Stütze in einer der Raststellungen die Fixierhilfe gegen ein Umkippen sichert, wenn diese derart aufgestellt wird, dass die Drehachse der abwinkelbaren Stütze horizontal zur Aufstellfläche verläuft. Eine zweite Raststellung kann für ein Einrasten der Stütze bei einem Winkel von ungefähr 90° sorgen. Eine mit einem Winkel von ungefähr 90° abgewinkelte Stütze kann die Fixierhilfe entsprechend einer solchen Ausgestaltung besonders gut dann abstützen, wenn diese so aufgestellt wird, dass der Drehwinkel des Scharniers im Wesentlichen senkrecht zur Aufstellfläche verläuft, was im Vergleich zur zuvor erwähnten Situation bei einer um 90° gedrehten Fixierhilfe der Fall ist.

Darüber hinaus kann die Fixierhilfe in einer Ausgestaltung der Erfindung eine Aufnahme umfassen, die durch wenigstens eine Aussparung in den Stützen gebildet wird. So kann ohne zusätzlichem Materialaufwand eine Aufnahme zur Aufnahme von Kabeln bereitgestellt werden. Die Aussparungen können an verschiedenen Positionen der Stützen positioniert werden. Eine solche Fixierhilfe kann zur Lagesicherung von mehreren Kabeln genutzt werden, wobei zweckmäßigerweise mehrere Aufnahmen in einem Abstand voneinander an der Fixierhilfe positioniert sind, so dass zur Manipulation von Kabeln, z.B. beim Montieren und/oder Verbinden, entsprechende Sicherheitsabstände zwischen den Kabeln eingehalten werden können. Eine solche Ausgestaltung der Erfindung ist insbesondere günstig wenn die Fixierhilfe bei der Manipulation von Kabeln für Hochspannungsleitungen, z.B. mit Spannungsbereichen von 1 kV bis 30 kV, eingesetzt wird. Durch Aussparungen an verschiedenen Positionen der Stützen können Aufnahmen auf verschiedenen Fixierhöhen der Fixierhilfe bereitgestellt werden. Eine solche Ausgestaltung der Fixierhilfe ist zur besseren Organisation von Arbeitsabläufen günstig. So können Kabel beispielsweise auf einer ersten Höhe für Vorbereitungsarbeiten oder Prüfzwecke fixiert werden, um dann auf einer zweiten Höhe für eine Endmontage fixiert zu werden.

In einer weiteren besonders vorteilhaften Ausgestaltung der Erfindung sind die Aussparungen an einem Stützende angeordnet. Eine solche Aussparung kann als

Aufnahme zur Lagesicherung eines Kabels genutzt werden, wobei durch die Positionierung der Aufnahme am Stützende ein besonders großer Abstand zwischen mehreren Aufnahmen realisiert werden kann. Eine solche Aussparung am Stützende hat ferner den Vorteil, dass die dadurch entstehende gabelförmige Fortsätze dazu genutzt werden können, um die Fixierhilfe gegen ein Wegrutschen auf der Stützfläche abzusichern. Dabei können die gabelförmigen Fortsätze beispielsweise in das Erdreich der Stützfläche fest eingedrückt werden.

In einer weiteren Ausgestaltung der Erfindung sind alle Stützen der Fixierhilfe drehbar auf einer Achse angeordnet und über diese Achse miteinander verbunden, so dass die Stützen nach dem Prinzip eines Klappmessers parallel zueinander ausrichtbar sind. In einer solchen Ausgestaltung der Erfindung können beispielsweise zwei Stützen eine Hubschere bilden und dabei als Hubscherenschenkel verdrehbar aneinander befestigt sein, wobei weitere Stützen abwinkelbar an der Fixierhilfe über die Drehachse der Hubscherenschenkel miteinander verbunden sind. Die Stützen können eingeklappt und so verdreht werden, dass alle Stützen parallel zueinander ausgerichtet sind, so dass zum Transport der Fixierhilfe ein nur minimales Volumen benötigt wird. Indem alle Stützen an nur einer einzigen Drehachse miteinander verbunden werden, kann der Materialeinsatz beim Herstellen der Fixierhilfe minimiert werden.

In einer Ausgestaltung der Erfindung ist die Fixierhilfe aus Hartholz oder aus Kunststoff hergestellt.

Eine vorteilhafte Ausgestaltung der erfindungsgemäßen Fixierhilfe wird anhand des in den Zeichnungen dargestellten Ausführungsbeispiels erläutert.

Es zeigen:
- Figur 1: eine schematische Ansicht einer erfindungsgemäßen Fixierhilfe zur Manipulation von Kabeln als Stellage für Kabel, wobei die Fixierhilfe für den Transport in einem zusammengeklappten Zustand dargestellt ist,
- Figur 2: eine schematische Ansicht der Fixierhilfe, wobei die Fixierhilfe zur Aufnahme von Kabel in einem ausgeklappten Zustand auf einer ebenen Fläche abgestellt dargestellt ist,
- Figur 3: eine schematische Ansicht der Fixierhilfe, dargestellt in einem ausgeklappten Zustand, wobei im Vergleich zu Figur 2, die Fixierhilfe um 90° gedreht ist,
- Figur 4: eine vergrößerte schematische Ansicht der Fixierhilfe im aufgeklappten, wie in Figur 2 dargestellten, Zustand, wobei im Wesentlichen eine Scharnierplatte dargestellt ist, an der eine Stütze mit zwei Hubscherenschenkel befestigt ist,
- Figur 5: eine schematische Ansicht der zwei Hubscherenschenkel,
- Figur 6: eine vergrößerte, schematische Ansicht der zusammengeklappten Fixierhilfe von der Seite.

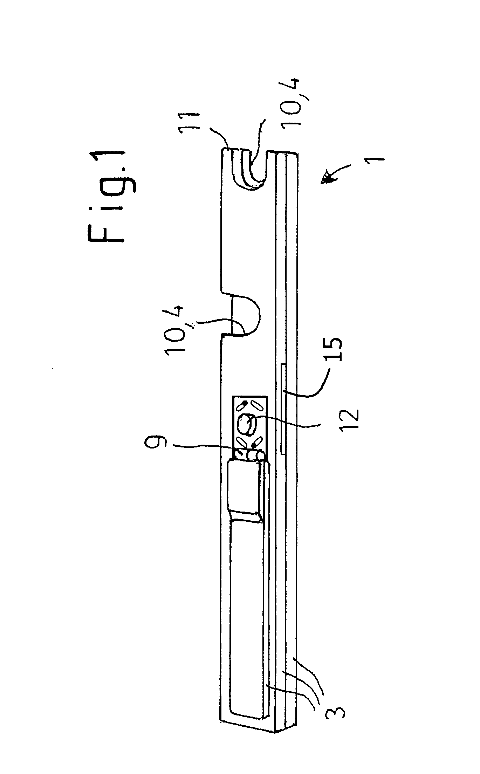

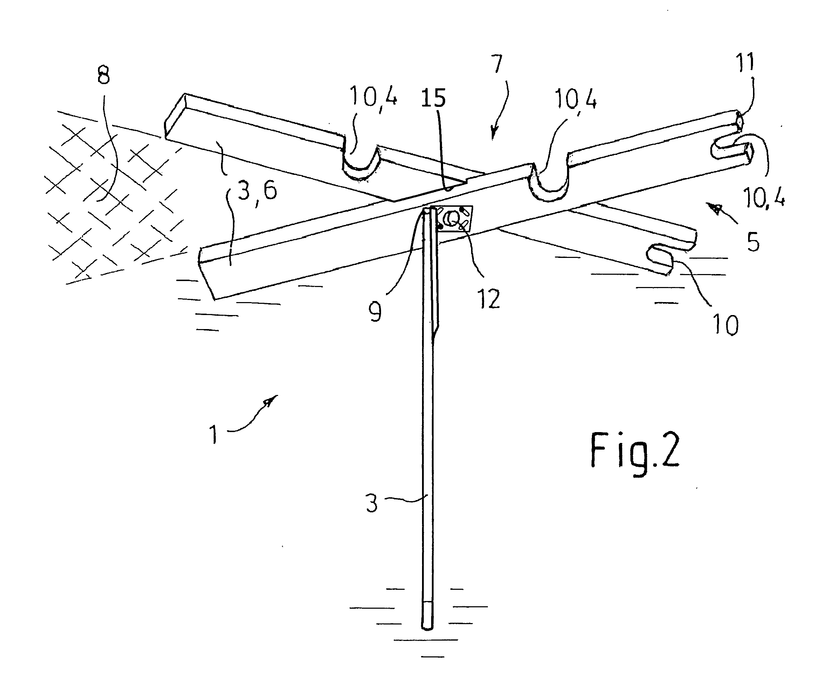

In Figur 1 ist schematisch eine erfindungsgemäße Fixierhilfe 1 zur Manipulation von Kabeln als Stellage für Kabel mit genau drei Stützen dargestellt. Die Fixierhilfe 1 ist in Figur 1 für den Transport zusammengeklappt dargestellt. Die Fixierhilfe 1 umfasst zwei Stützen 3, die zum Ausbilden einer Hubschere 5 als Hubscherenschenkel verdrehbar über eine Achse 12 miteinander verbunden sind. Während in Figur 1 die beiden Hubscherenschenkel 6 parallel zueinander ausgerichtet sind, um ein minimales Volumen beim Transport einzunehmen, sind die Hubscherenschenkel 6 in Figur 2, Figur 3 und Figur 4 für den Einsatz der Fixierhilfe zur Manipulation von Kabeln in einem Winkel verdreht zueinander dargestellt.

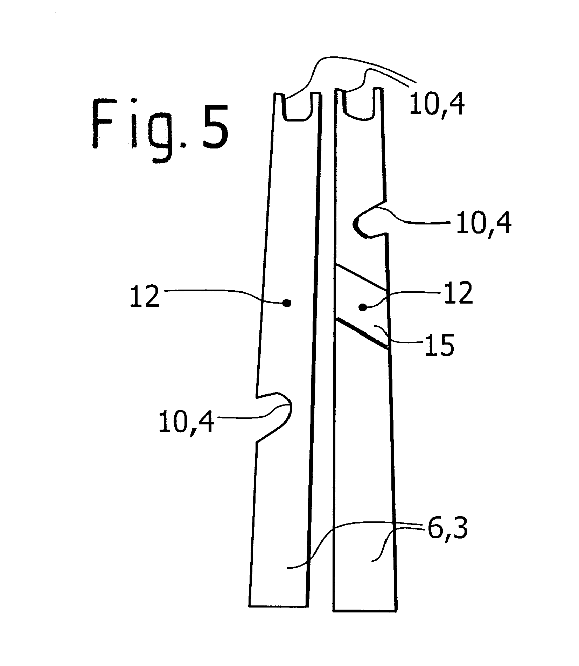

Um die Fixierhilfe 1 gegen ein ungewolltes Verdrehen der Hubscherenschenkel 6 zu schützen, weist ein Hubscherenschenkel 6 eine Aussparung 15 auf, so dass die beiden Hubscherenschenkel 6 bei einem bestimmten Winkel ineinander einrasten können. Diese Position kann durch Festdrehen einer an der Achse 12 angedrehten Mutter fixiert werden. Die Aussparung 15 ist deutlicher in Figur 5 erkennbar. Hier sind die beiden Hubscherenschenkel 6 nebeneinander angeordnet dargestellt. Die Hubscherenschenkel 6 werden über Bohrungen, durch die die Achse 12 geführt wird miteinander verbunden. In der Darstellung aus Figur 5 wird deutlich, wie die Aussparung 15 in einem der Hubscherenschenkel 6 ausgebildet ist, um den anderen Hubscherenschenkel 6 in dieser Aussparung 15 bei einer geeigneten Verdrehung der beiden Hubscherenschenkel 6 einrasten zu lassen.

Die in den übrigen Figuren dargestellte Fixierhilfe 1 umfasst ferner eine Stütze 3, die abwinkelbar über ein Scharnier 9 an der Hubschere 5 befestigt ist. Diese Stütze 3 ist so ausgebildet, dass sie, wie in Figur 1 dargestellt, im eingeklappten Zustand parallel zu den Hubscherenschenkeln 6 ausgerichtet ist. Beim Einsatz der Fixierhilfe 1 kann diese Stütze 3 ausgeklappt werden, um die Hubschere 5 gegen ein Umkippen in senkrechter Richtung gegenüber der durch die zwei Hubscherenschenkel 6 aufgespannten Hubscherenebene 8 zu sichern.

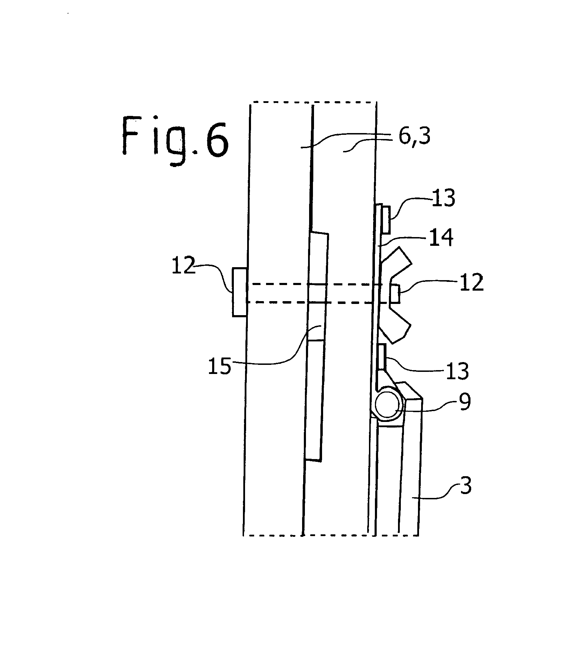

Die Fixierhilfe 1 ist in Figur 6 im eingeklappten Zustand von der Seite und vergrö-βert dargestellt. In der Figur 6 ist erkennbar, dass die beiden Hubscherenschenkel 6, eine Scharnierplatte 14 und eine Mutter umfassen, die auf der Achse 12 angeordnet sind. Die Scharnierplatte 14 ist zusätzlich mit Schrauben 13 an einem der Hubscherenschenkel 6 befestigt und umfasst ein Scharnier 9 an dem die Stütze 3 befestigt ist.

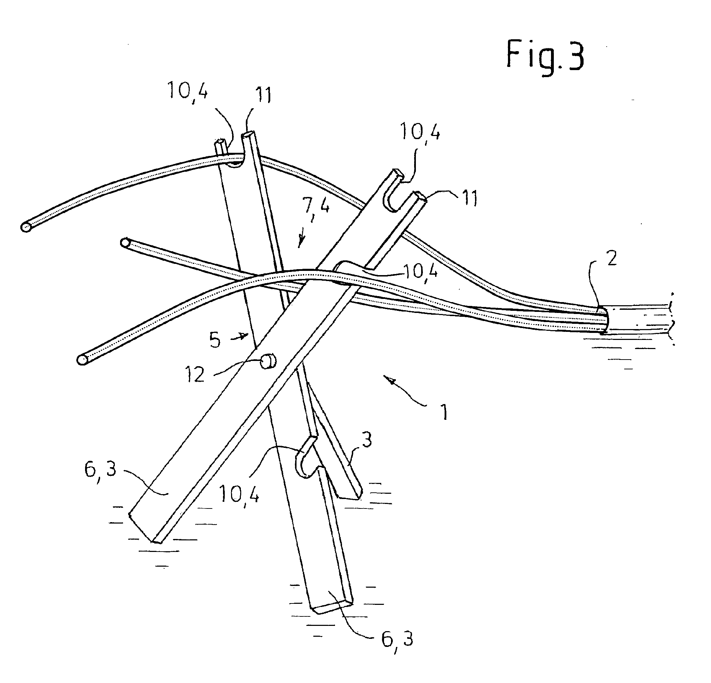

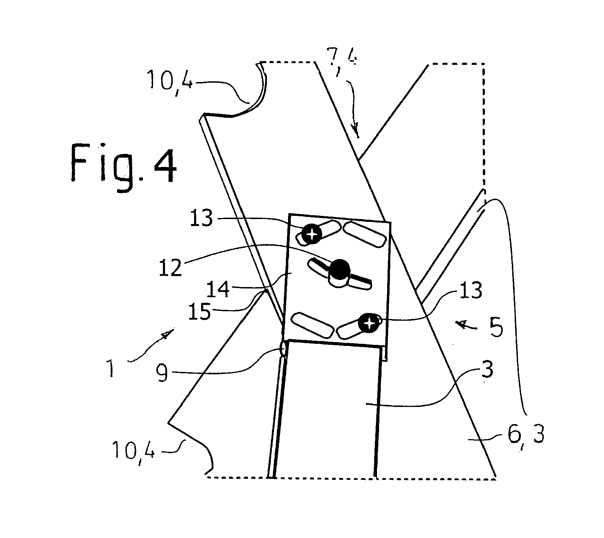

Die Hubschere 5 ist im ausgeklappten und auf einer ebenen Fläche aufgestellten Zustand in Figur 2, Figur 3 und Figur 4 dargestellt. In Figur 4 ist eine vergrößerte Ansicht der zuvor erwähnten Scharnierplatte 14 dargestellt. Die Scharnierplatte ist mit Schrauben 13 auf einem der Hubscherenschenkeln 6 befestigt. Neben den zwei Hubscherenschenkeln 6, die jeweils an einem Ihrer Enden die Hubschere 5 auf der ebenen Fläche abstützen, ist insbesondere in den Figuren 2 und 3 die dritte abwinkelbare Stütze 3 im ausgeklapptem Zustand dargestellt. Die Stütze 3 sichert die Hubschere 5 und damit die Fixierhilfe 1, wie bereits erwähnt, gegen ein Umkippen.

Die Fixierhilfe 1 umfasst ferner Aussparungen 10, wobei die Aussparungen 10 jeweils eine Aufnahme 4 zur Lagesicherung wenigstens eines Kabels bilden. Wie in Figur 1 und Figur 2 dargestellt, befindet sich jeweils eine der Aussparungen 10 an einem Stützende 11 der Hubscherenschenkel 6, sowie jeweils eine weitere Aussparung 10 auf der Längsseite der Hubscherenschenkel 6 in einem Abstand zur Drehachse 12 der Hubschere 5.

Neben den Aussparungen 10 bildet auch der Zwischenraum 7 zwischen den Hubscherenschenkeln 6 eine Aufnahme 4 zur Lagesicherung wenigstens eines Kabels 2. Die Aussparungen am jeweiligen Stützende der Hubscherenschenkel 6 dienen zum einen zur Aufnahme von Kabeln 2 als auch zur Sicherung der Fixierhilfe 1 auf dem Boden. Dabei können die gabelförmigen Fortsätze, die durch die Aussparungen am Stützende 11 gebildet werden, beim Abstützen der Fixierhilfe 1 auch in den Boden gedrückt werden, wenn sich die Fortsätze, wie in Figur 2 angedeutet, auf zur Aufstellfläche zugewandten Seite befinden.

Da der spitze Winkel zwischen den Hubscherenschenkeln 6 beim Einrasten des Hubscherenschenkels 6 in der Aussparung 15 ungefähr 60° beträgt, kann die Höhe des Zwischenraums 7 zur Aufnahme eines Kabels 2 zwischen den Hubscherenschenkeln durch Drehen der Fixierhilfe um 90° variiert werden. Während die Fixierhilfe 1 in Figur 2 mit dem stumpfen Winkel zwischen den Hubscherenschenkeln 6 nach unten zur Aufstellfläche hin gerichtet dargestellt ist, ist die Fixierhilfe 1 in Figur 3 um 90° gedreht dargestellt. In der hier dargestellten Ausführungsform kann durch die Drehung eine Variation der Arbeitshöhe, festgelegt durch den Zwischenraum 7, von ungefähr 25 cm auf ungefähr 50 cm ermöglicht werden. Bei der Fixierhilfe 1 in Figur 3 zeigt der spitze Winkel zwischen den Hubscherenschenkeln 6 nach unten zur Aufstellfläche, so dass der Zwischenraum 7 zur Aufnahme von Kabeln 2 gegenüber der in Figur 2 dargestellten Situation erhöht ist.

In Figur 3 ist im Zwischenraum 7 der Fixierhilfe 1 ein Kabel 2 dargestellt, wie es von der Fixierhilfe fixiert wird. Bei dem in Figur 3 dargestellten Kabel 2 handelt es sich um ein unterbrochenes Kabel 2 mit einem Kabelende, wobei der aus mehreren einzelnen Kabelsträngen bestehende Kabelabschnitt vor dem Kabelende abisoliert ist und die einzelnen Kabelstränge von der Fixierhilfe 1 aufgebockt werden, um so die einzelnen Kabelstränge auf einer bestimmten Höhe zum Verbinden mit einem anderen Kabel zu fixieren. Die Fixierhilfe 1 ist so ausgerichtet, dass das dritte Stützbein 3 die Fixierhilfe 1 gegen ein Umkippen sichert. Dabei ist die Fixierhilfe 1 so ausgerichtet, dass das Stützbein 3 auf der gegenüberliegenden Seite des Kabelendes die Fixierhilfe 1 abstützt. So kann die Fixierhilfe 1 gegen ein Umkippen aufgrund der Gewichtskräfte des Kabels 2 gesichert werden. Im der vorliegend dargestellten Situation zeigt der spitze Winkel zwischen den Hubscherenschenkeln 6 nach unten zur Aufstellfläche. Das Scharnier 9 ist dabei so ausgerichtet, dass die Drehachse des Scharniers 9 horizontal verläuft. Das Stützbein 3 kann daher zum Abstützen der Fixierhilfe 1 beliebig weit nach außen abgewinkelt werden. In der vorliegend dargestellten Situation beträgt der Winkel ungefähr 45°, da bei den Längenverhältnissen der hier dargestellten Ausführungsform so eine maximale Stabilität erreicht werden kann. Zweckmäßigerweise ist eine Raststellung vorgesehen, so dass die Stütze 3 in einem Winkel von ungefähr 45° einrasten kann.

Wird die Fixierhilfe 1 um 90° gedreht, so wie es in Figur 2 dargestellt ist, so verläuft die Drehachse des Scharniers 9 ungefähr senkrecht zur Aufstellfläche. In diesem Fall wird die Stütze 3 um 90° abgewinkelt. Entsprechendes ist auch in Figur 2 erkennbar. Auch hier weist die Stütze 3 zweckmäßigerweise eine Raststellung auf, so dass eine maximale Stabilität der Fixierhilfe 1 auch in dieser Position gewährleistet werden kann.

Die Fixierhilfe kann weitere Kabel in den Aussparungen 10, die in den Hubscherenschenkeln 6 eingelassen sind, aufnehmen. Insbesondere können so Kabel 2 auf verschiedenen Höhen fixiert werden. Mithilfe der Fixierhilfe 1, wie sie in Figur 2 und Figur 3 dargestellt ist, können Kabel auf drei verschiedenen Höhen fixiert werden. Die Fixierhilfe 1 kann durch Verdrehen der Hubscherenschenkel 6 auch weitere Aufnahmehöhen zur Aufnahme von Kabeln bereitstellen. So können beispielsweise die Aussparungen 10 anstatt, wie in Figur 2 und Figur 3 dargestellt oberhalb der Drehachse 12 der Hubscherenschenkel 6, auch unterhalb der Drehachse 12 angeordnet werden. Denkbar sind weitere Aussparungen 10, um gleichzeitig eine Aufnahme 4 sowohl oberhalb als auch unterhalb der Drehachse 12 bereitzustellen.

Wird die Fixierhilfe 1 so wie in Figur 3 dargestellt aufgestellt, so dienen beide Aussparungen 10 an den Stützenden 11 zur Aufnahme von Kabeln 2 und nicht etwa zum Absichern der Fixierhilfe 1 gegen ein etwaiges Wegrutschen des Hubscherenschenkels 6, wie es in der in Figur 2 dargestellten Ausführungsform der Fall ist.

### Bezugszeichenliste

- 1.: Fixierhilfe
- 2.: Kabel
- 3.: Stütze
- 4.: Aufnahme
- 5.: Hubschere
- 6.: Hubscherenschenkel
- 7.: Zwischenraum
- 8.: Hubscherenebene
- 9.: Scharnier
- 10.: Aussparung
- 11.: Stützende
- 12.: Drehachse
- 13.: Schraube
- 14.: Scharnierplatte
- 15.: Aussparung zum Einrasten der Hubscherenschenkel

## Patentansprüche

1. Fixierhilfe (1) zur Manipulation von Kabeln als Stellage für Kabel (2) mit wenigstens drei Stützen (3), die wenigstens eine Aufnahme (4) zur Lagesicherung wenigstens eines Kabels (2) bilden und/oder aufweisen.

2. Fixierhilfe (1) nach Anspruch 1, **dadurch gekennzeichnet, dass** die Aufnahme (4) höhenverstellbar ausgebildet ist.

3. Fixierhilfe (1) nach einem der Ansprüche 1 oder 2, **dadurch gekennzeichnet, dass** wenigstens zwei Stützen (3) eine Hubschere (5) bilden und dabei als Hubscherenschenkel (6) verdrehbar aneinander befestigt sind.

4. Fixierhilfe (1) nach einem der Ansprüche 1 bis 3, **dadurch gekennzeichnet, dass** wenigstens ein Zwischenraum (7) zwischen den Stützen die Aufnahme (4) bildet.

5. Fixierhilfe (1) nach Anspruch 4, **dadurch gekennzeichnet, dass** der Zwischenraum (7) von den Hubscherenschenkeln (6) gebildet wird.

6. Fixierhilfe (1) nach einem der Ansprüche 3 bis 5, **dadurch gekennzeichnet, dass** die Hubscherenschenkel (6) im Wesentlichen in einer Hubscherenebene (8) liegen.

7. Fixierhilfe (1) nach Anspruch 6, **dadurch gekennzeichnet, dass** zur Stabilisierung der Fixierhilfe (1) wenigstens eine Stütze (3) in einem Winkel zur Hubscherenebene (8) abwinkelbar an der Fixierhilfe (1) befestigt ist.

8. Fixierhilfe (1) nach einem der Ansprüche 1 bis 7, **dadurch gekennzeichnet**, die Aufnahme (4) durch wenigstens eine Aussparung (10) in den Stützen (3) gebildet ist.

9. Fixierhilfe (1) nach Anspruch 8, **dadurch gekennzeichnet, dass** die Aussparung (10) an einem Stützende (11) angeordnet ist.

10. Fixierhilfe (1) nach einem der Ansprüche 1 bis 9, **dadurch gekennzeichnet, dass** alle Stützen (3) drehbar auf einer Achse (12) angeordnet und über diese Achse (12) miteinander verbunden sind, so dass die Stützen (3) nach dem Prinzip eines Klappmessers parallel zueinander ausrichtbar sind.
